# EUROPÄISCHE PATENTANMELDUNG

(11) **EP 2 910 289 A1**
(43) Veröffentlichungstag der Anmeldung: **26.08.2015**
(21) Anmeldenummer: 15163681.8
(22) Anmeldetag: 18.06.2010
(51) Int. Cl.: B01D 27/10, B01D 35/153, F01M 11/03, F01M 11/04

(54) **FILTEREINRICHTUNG**

(30) Priorität: 24.06.2009 DE 102009030561; 16.02.2010 DE 102010008064
(62) Teilanmeldung aus: 10723628.3
(71) Anmelder: Mahle International GmbH, 70376 Stuttgart (DE)
(72) Erfinder: Hirsch, Markus, 38550 Isenbüttel (DE); Stifel, Marco, 70178 Stuttgart (DE); Yuan, Zhang, 200127 Shanghai (CN)
(74) Vertreter: BRP Renaud & Partner mbB Rechtsanwälte Patentanwälte Steuerberater

(57) **Zusammenfassung**

Die vorliegende Erfindung betrifft eine Filtereinrichtung (1), insbesondere ein Ölfilter, mit einem, einen Aufnahmeraum (5) begrenzenden Filtergehäusedeckel (2), in dem ein Ringfilterelement (6) angeordnet ist, mit einem Gehäuse (4), in welchem mittig ein Dom (15) angeordnet ist und auf welches der Filtergehäusedeckel (2) aufgeschraubt wird, mit wenigstens einem Zwischenstück (3), welches bei am Gehäuse (4) angeschraubtem Filtergehäusedeckel (2) zwischen Filtergehäusedeckel (2) und Gehäuse (4) angeordnet ist, mit einem gehäuseseitigen Einlasskanal (7), der mit einer Rohseite des Ringfilterelementes (6) kommuniziert, und einem gehäuseseitigen Auslasskanal (8), der mit einer Reinseite des Ringfilterelementes (6) kommuniziert, mit einem gehäuseseitigen Leerlaufkanal (9), durch den der Aufnahmeraum (5) beim Entfernen des Filtergehäusedeckels (2) entleerbar ist, mit einer in dem Zwischenstück (3) drehbar um die Filterachse (10) angeordneten Verschlusseinrichtung (11), die ein Verschlusselement (12) aufweist, mit welchem der Leerlaufkanal (9) verschließbar ist.

## Beschreibung

Die vorliegende Erfindung betrifft eine Filtereinrichtung für Flüssigkeiten, insbesondere ein Ölfilter zum Reinigen von Schmieröl für Verbrennungsmotoren von Kraftfahrzeugen, mit den Merkmalen des Oberbegriffs des Anspruchs 1.

Filtereinrichtungen, insbesondere Ölfilter für Verbrennungsmotoren von Kraftfahrzeugen, besitzen üblicherweise ein sogenanntes Ringfilterelement, mittels welchem eine die Filtereinrichtung durchströmende Flüssigkeit gefiltert wird. Turnusgemäß muss dieses Ringfilterelement ausgetauscht werden, um die Filterwirkung der Filtereinrichtung stets gewährleisten zu können. Das Ringfilterelement wird durch Abnahme einer Filtereinrichtung vom Gehäuse mit entfernt. Aufgrund der stetig steigenden Umweltauflagen muss dabei der Austausch des Ringfilterelementes möglich sein, ohne dass Flüssigkeit, insbesondere Öl, in die Umgebung gelangt. Aus diesem Grunde besitzen herkömmliche Filtereinrichtungen in ihrem Gehäuse neben einem Einlasskanal, der mit einer Rohseite des Ringfilterelementes kommuniziert und einem Auslasskanal der mit einer Reinseite des Ringfilterelementes kommuniziert, auch einen Leerlaufkanal, durch den ein Aufnahmeraum, in welchem das Ringfilterelement angeordnet ist, beim Abschrauben der Filtereinrichtung entleerbar ist. Selbstverständlich muss dieser Leerlaufkanal bei betriebsbereiter Filtereinrichtung verschlossen sein, da ansonsten die Reinseite und die Rohseite des Ringfilterelementes miteinander kurzgeschlossen werden würden und dadurch die Filtereinrichtung seine Filterwirkung nicht entfalten könnte.

Die EP 1 949 950 A1 zeigt eine gattungsgemäße Filtereinrichtung, bei der sich der seitlich umlaufende Rand der Platte in der Umfangsrichtung geschlossen bzw. unterbrechungsfrei erstreckt.

Aus der DE 20 2009 002 455 U1 ist eine weitere Filtereinrichtung bekannt, bei welcher das Verschlusselement ringsegmentförmig ausgestaltet ist.

Die vorliegende Erfindung beschäftigt sich mit dem Problem, für eine Filtereinrichtung eine verbesserte oder zumindest eine andere Ausführungsform anzugeben, welche ein automatisches Öffnen bzw. Verschließen eines Leerlaufkanales beim Aus- bzw. Einbau einer Filtereinrichtung ermöglicht.

Erfindungsgemäß wird dieses Problem durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, zwischen einer stehend angeordneten Filtereinrichtung und einem darunter angeordneten Gehäuse ein Zwischenstück vorzusehen, in welches eine Verschlusseinrichtung integriert ist. Die Verschlusseinrichtung ist dabei drehbar um die Filterachse des Ringfilterelementes ausgebildet, wobei das Ringfilterelement selbst in einem Aufnahmeraum angeordnet ist, welcher von einem Filtergehäusedeckel begrenzt ist. Gehäuseseitig sind ein Einlasskanal und ein Auslasskanal vorgesehen, wobei der Einlasskanal mit einer Rohseite des Ringfilterelementes und der Auslasskanal mit einer Reinseite des Ringfilterelementes kommuniziert. Ebenso in dem Gehäuse vorgesehen ist ein Leerlaufkanal, durch den der Aufnahmeraum beim Abschrauben der Filtereinrichtung entleerbar ist, so dass keine Filterflüssigkeit, insbesondere kein Öl, in die Umgebung gelangen kann. Die drehbar um die Filterachse angeordnete Verschlusseinrichtung weist ein Verschlusselement auf, mit welchem der Leerlaufkanal bei vollständig an das Gehäuse angeschraubter Filtereinrichtung verschließbar ist. Generell ist die Verschlusseinrichtung so ausgebildet, dass sie beim Anschrauben der Filtereinrichtung am Gehäuse in einer genau definierten Lage fixiert ist, in der das Verschlusselement fluchtend zum Leerlaufkanal angeordnet und durch das Anschrauben der Filtereinrichtung in eine den Leerlaufkanal verschließende Stellung verstellbar ist. Im Unterschied dazu wird die Verschlusseinrichtung beim Abschrauben der Filtereinrichtung vom Gehäuse verdreht und gleichzeitig axial vom Gehäuse weg bewegt, so dass das Verschlusselement beim Abschrauben der Filtereinrichtung vom Gehäuse den Leerlaufkanal freigibt und ein Leerlaufen des Zwischenstücks und gegebenenfalls des das Ringfilterelement beinhaltenden Aufnahmeraums ermöglicht. Durch die erfindungsgemäße Verschlusseinrichtung, welche beispielsweise als kostengünstiges Kunststoffteil mit einem Verschlusselement aus einem anderen Kunststoff ausgebildet sein kann, ist es auf technisch einfachste Weise möglich, den Leerlaufkanal bei vollständig am Gehäuse angeschraubter Filtereinrichtung zuverlässig zu verschließen und dadurch eine einwandfreie Funktion der Filtereinrichtung zu gewährleisten, wobei bei einem Abschrauben der Filtereinrichtung vom Gehäuse der Leerlaufkanal automatisch geöffnet wird, so dass der das Ringfilterelement enthaltende Aufnahmeraum leer laufen kann und keine Filterflüssigkeit in die Umgebung gelangt. Ein separates Öffnen bzw. Schließen des Leerlaufkanals, verbunden mit der Möglichkeit dieses zu vergessen, kann durch die erfindungsgemäße Filtereinrichtung zuverlässig ausgeschlossen werden, wodurch sich der Wartungsvorgang deutlich sicherer und zudem montagefreundlicher gestalten lässt. Durch die während des Anschraubvorgangs der Filtereinrichtung am Gehäuse genau fixierte Lage der Verschlusseinrichtung kann darüber hinaus ein aufwändiges Positionieren bzw. Ausrichten des Verschlusselementes bezüglich des zu verschließenden Leerlaufkanals entfallen, wobei stets gewährleistet ist, dass der Leerlaufkanal bei vollständig am Gehäuse angeschraubter Filtereinrichtung zuverlässig verschlossen ist.

Zweckmäßig ist die Verschlusseinrichtung als Platte ausgebildet und die Verschlusseinrichtung als Kappe mit drehbar darin gelagerter Platte ausgebildet ist und die Platte einen durchbrochenen Seitenrand mit Öffnungen aufweist. Wird der Filtereinrichtung angeschraubt, so erfolgt eine Stauchung des Federelementes wodurch eine Axialverstellung des Verschlusselementes hin zum Leerlaufkanal verhindert, so dass das Verschlusselement auf einer Mündung des Leerlaufkanals aufliegt, und zwar so, dass der Leerlaufkanal dicht verschlossen ist.

Bei einer weiteren vorteilhaften Ausführungsform der erfindungsgemäßen Lösung greift die Platte beim Anschrauben der Filtereinrichtung mit mindestens einer Rippe, die an mindestens einem Seitenteil der durchbrochenen Seitenwand angeordnet ist, an einer Rampe der Kappe an und ist durch ein weiteres Anschrauben der Filtereinrichtung in seine den Leerlaufkanal verschließende Stellung verstellbar.

Bei einer weiteren vorteilhaften Ausführungsform der erfindungsgemäßen Lösung ist zwischen dem Zwischenstück und dem darüber angeordneten Ringfilterelement ein scheibenartiger Boden und ein einfaches Federelement vorgesehen, wobei der Boden mehrere in Umfangsrichtung verteilte Durchgangsöffnungen aufweist. Das Nichtmitdrehen der Verschlusseinrichtung beim Abschrauben des Filtergehäusedeckels vom Gehäuse bewirkt ein Anheben des Verschlusselementes und damit eine Axialverstellung der Verschlusseinrichtung samt Verschlusselement, so dass das Verschlusselement die Mündung des Leerlaufkanals freigibt. Die Verschlusseinrichtung verhält sich somit beim Anschraubvorgang bzw. Abschraubvorgang der Filtereinrichtung am/vom Gehäuse komplett anders.

Beim Anschrauben der Filtereinrichtung am Gehäuse wird dabei die Verschlusseinrichtung, das heißt die zwischen Verschlusseinrichtung und Boden angeordnete Feder gestaucht, bis das an der Verschlusseinrichtung angeordnete Verschlusselement dicht auf dem Leerlaufkanal anliegt. Dadurch kann beim Anschrauben der Filtereinrichtung am Gehäuse ein zuverlässiges Verschließen des Leerlaufkanals und beim Abschrauben der Filtereinrichtung vom Gehäuse ein zuverlässiges Öffnen und damit Leerlauf des Aufnahmeraums bewirkt werden. Diese gewährleistet zum einen eine hohe Funktionssicherheit der Filtereinrichtung und zum anderen kann ein Austritt von Filterflüssigkeit in die Umgebung zuverlässig vermieden werden, da der Leerlaufkanal vorzugsweise bereits bei wenigen Umdrehungen der Filtereinrichtung vollständig geöffnet wird, so dass der Aufnahmeraum vollständig leer laufen kann, bevor durch weitere Umdrehungen die Filtereinrichtung abgenommen ist.

Der Austritt von Flüssigkeit in die Umgebung kann zusätzlich durch eine äußere axial und radial wirkende Dichtungskombination verhindert werden, die die Verschlussfunktion der Filtereinrichtung gegenüber dem Gehäuse auch dann noch gewährleistet, wenn die Flachdichtung keinen Kontakt zu dem Gehäuse aufweist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: zeigt eine Außenansicht der erfindungsgemäßen Filtereinrichtung
- Fig. 2: zeigt ein Detail der Außenansicht
- Fig. 3: zeigt die äußere Dichtung
- Fig. 4: zeigt das Detail als Explosionsdarstellung
- Fig. 5: zeigt ein Detail in der Draufsicht von oben
- Fig. 6: zeigt die Platte in zwei Ansichten a) und b)
- Fig. 7: zeigt einen Schnitt durch das untere Ende der Filtereinrichtung
- Fig. 8: zeigt die Kappe und die Platte zusammen
- Fig. 9: zeigt das Gehäuse
- Fig. 10: zeigt einen Schnitt durch die Filtereinrichtung beim Anschrauben an das Gehäuse
- Fig. 11: zeigt einen Schnitt durch die Filtereinrichtung im angeschraubt Zustand
- Fig. 12: zeigt einen Schnitt durch die Filtereinrichtung beim Abschrauben vom dem Gehäuse
- Fig. 13: zeigt ein Detail aus Fig. 11
- Fig. 14: zeigt eine alternative Ausführungsform
- Fig. 15: zeigt einen Ausschnitt der Platte aus Fig. 14
- Fig. 16: zeigt eine Ansicht der Platte aus Fig. 14 von unten
- Fig. 17: zeigt eine Ansicht der Platte aus Fig. 14 mit Kappe
- Fig. 18: zeigt eine weitere alternative Ausführungsform in der Explosionsdarstellung
- Fig. 19: zeigt das untere Ende der Filtereinrichtung zur weiteren Ausführungsform
- Fig. 20: zeigt die Kappe der weiteren Ausführungsform
- Fig. 21: zeigt die Platte der weiteren Ausführungsform.

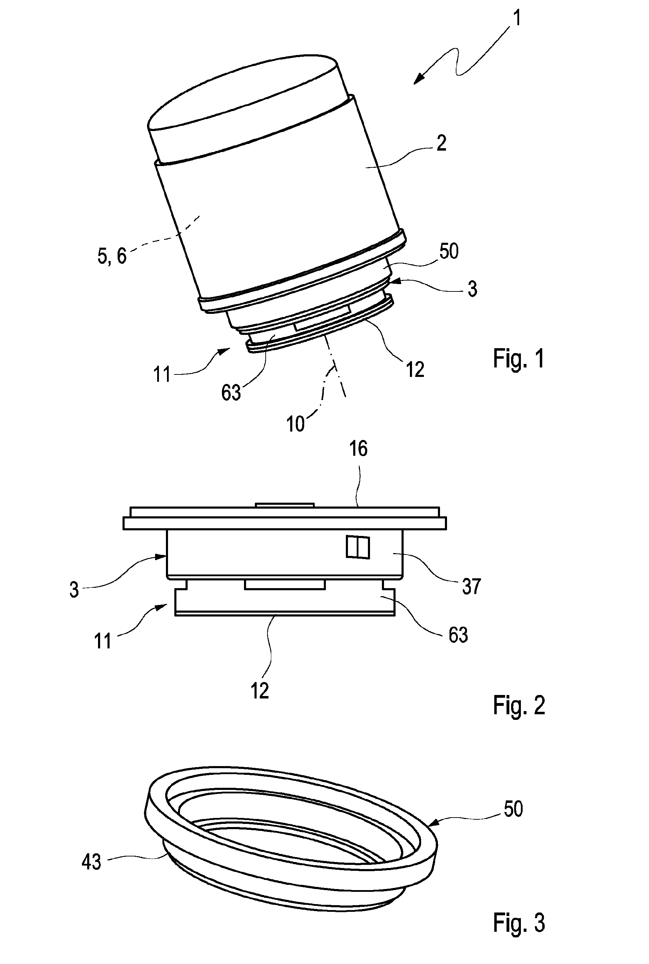

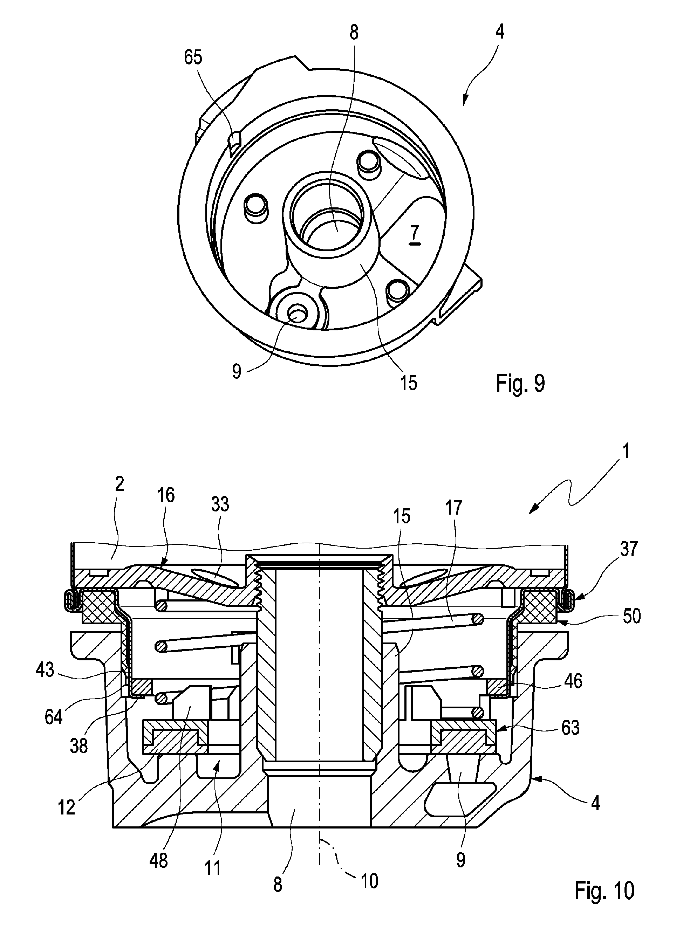

In Fig. 1 ist die Filtereinrichtung 1 von außen zusehen. Sie besteht aus einem Filtergehäusedeckel 2, dieser bildet in seinem Inneren einen Aufnahmeraum 5 in dem das Ringfilterelement 6 so angeordnet ist, dass es eine Reinseite von einer Rohseite trennt. Der innere Aufbau ist der eines üblicherweise verwendeten Wechselfilters der zur Filtrierung von Öl geeignet ist. An der dem Gehäuse 4 zugewandten Seite der Filtereinrichtung 1 befindet sich ein Zwischenstück 3. Das Gehäuse 4 an dem die Filtereinrichtung 1 festgeschraubt wird kann beispielsweise ein Motorblockgehäuse oder ein Zylindergehäuse sein. Der Einfachheit halber wird nur von Gehäuse 4 gesprochen. Das Gehäuse 4 ist so gestaltet, dass es einen Dom 15 mit Gewinde, sowie den Einlasskanal 7, den Auslasskanal 8 und den Leerlaufkanal 9 aufweist (siehe Fig. 9).

In der Fig. 2 ist das Zwischenstück 3 gezeigt, das mit dem Filtergehäusedeckel 2 an dem Übergang der beiden Teile dicht verbördelt ist. Das Zwischenstück 3 besteht aus einer äußeren Kappe 37 und einer innenliegenden Platte 63.

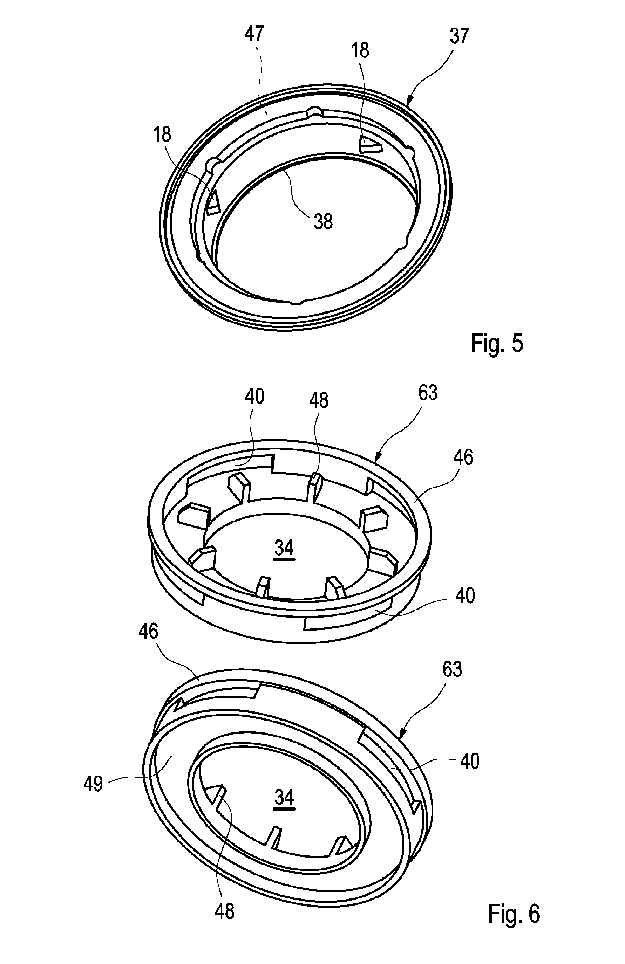

In der Fig. 3 ist die außen um die Kappe 37 anliegende Dichtung 50 gezeigt die in Richtung des Gehäuses 4 eine an der Kappe 37 außen anliegende Lippe 43 mit radialer Dichtwirkung aufweist. Diese Dichtung 50 dichtet im Allgemeinen die Filtereinrichtung 1 gegenüber der Umgebung ab, so dass während des Betriebes des Fahrzeuges und beim Abschrauben der Filtereinrichtung kein Öl in die Umgebung gelangen kann. Zur Aufnahme der Dichtung 50 ist in der Kappe 37 im Bereich der Verbindung zwischen Filtergehäusedeckel 2 und Kappe 37 eine in Axialrichtung offen Ringnut 47 vorgesehen (siehe Fig. 5)

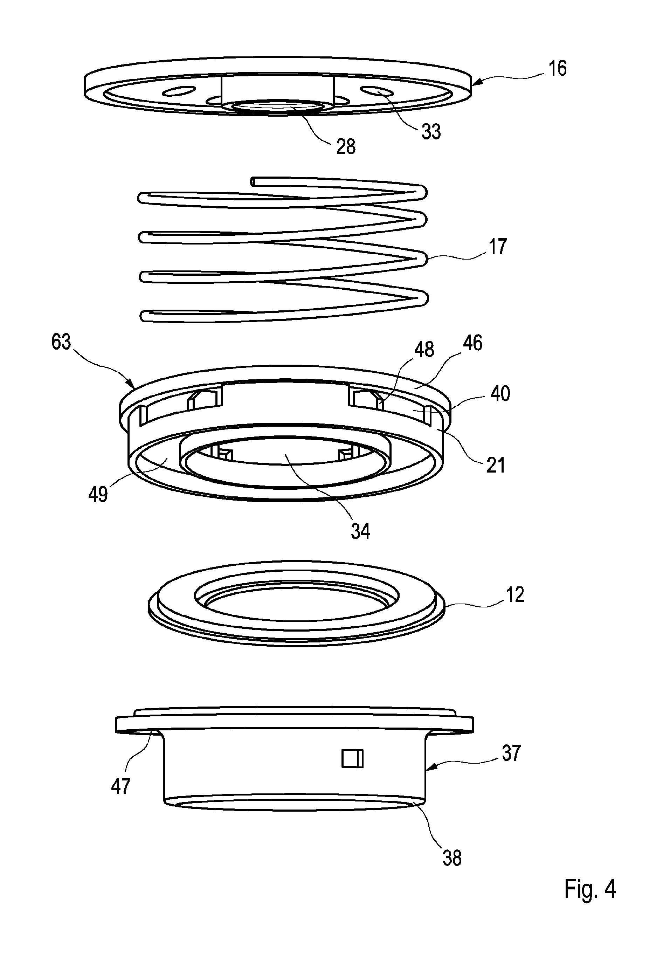

In der Fig. 4 sind die einzelnen Teile, die zusammen das Zwischenstück 3 bilden und weitere Teile dargestellt. Den Abschluss des Aufnahmeraumes 5 bildet ein Boden 16, der Durchgangsöffnungen 33 aufweist durch die Öl in den Aufnahmeraum 5 gelangen kann. Die zentrale Öffnung 34 weist ein Gewinde oder einen Gewindehohlbolzen auf damit die Filtereinrichtung 1 an dem Dom 15 des Gehäuses 4 festgeschraubt werden kann. Zwischen Boden 16 und Platte 63 befindet sich ein Federelement 17, in dem gezeigten Beispiel eine gewöhnliche Spiralfeder, es kann aber jedes geeignete Federelement 17 verwendet werden. Das Federelement 17 hat an der Platte 63 innen eine Auflagefläche. Die Platte 63 weist eine zentrale Öffnung 34 und einen seitlichen Rand 21 auf, der von Öffnungen 40 durchbrochen wird. Die Öffnungen 40 werden an ihrem oberen Ende durch einen Verbindungssteg 46 verbunden, der in Radialrichtung etwas übersteht und so einen Anschlag für die Platte 63 bildet. Dieser Anschlag bildet gleichzeitig die Halterung der Platte 63 in der Kappe 37. Die Kappe 37 hat zu diesem Zweck am unteren Ende einen umgebogenen Rand 38. Die Platte 63 weist auch an der dem Gehäuse zugewandten Seite eine flache Ringnut 49 auf, in die das Verschlusselement 12 in Form einer flachen O-Ring Dichtung eingelegt ist. Die Dichtmasse kann auch in die Ringnut 49 eingespritzt sein. Die genaue Form des Verschlusselementes 12 ist vom jeweiligen Anwendungsfall abhängig.

Alle genannten Teile der Filtereinrichtung 1, bis auf das Ringfilterelement 6 und die Dichtungen können aus Metall oder auch aus geeigneten Kunststoffen hergestellt sein, in letzterem Fall wäre dann allerdings die Kappe 37 mit dem Filtergehäusedeckel 2 nicht verbördelt, sondern verschweißt.

Im Detail sind die Kappe 37 und die Platte 63 nochmals in den Fig. 5 und 6 dargestellt. In der Kappe 37 befindet sich mindestens eine Vorsprung 18. Die Platte 63 ist beliebig drehbar in der Kappe 37 gelagert. In der Platte 63 auf der Innenseite ist mindestens Begrenzungsnoppe 48 angeordnet, die das Federelement 17 an seinem Platz halten.

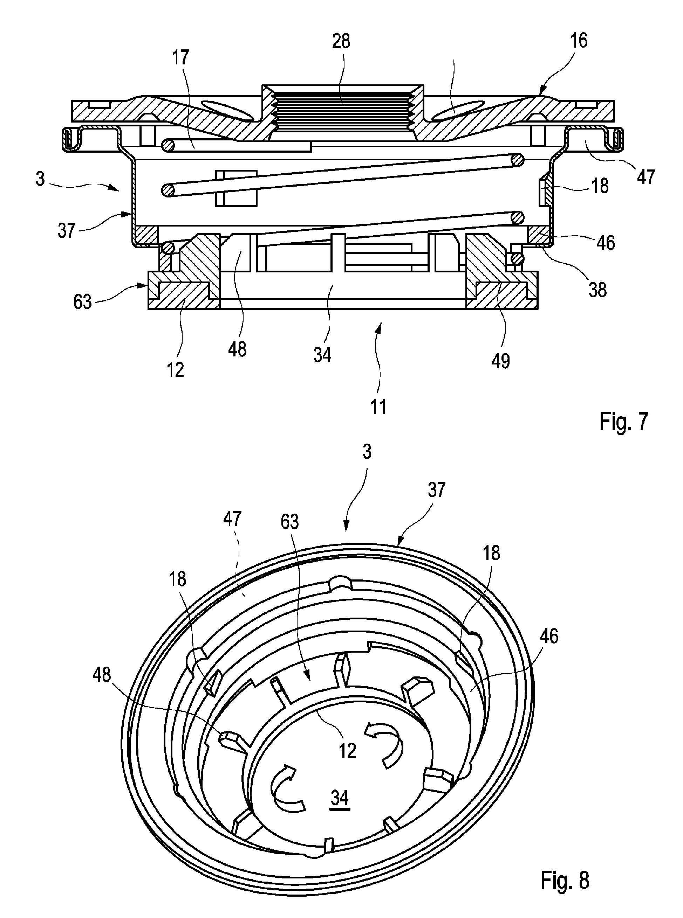

Fig. 7 zeigt einen Schnitt durch das untere Ende der Filtereinrichtung 1. Zusehen ist hier wie es aufgebaut ist. Die Vorsprünge 18 bilden in diesem Ausführungsbeispiel einen oberen Anschlag für die Platte 63, so dass die Platte 63 nicht in die Kappe 37 hineingedrückt werden kann.

In der Fig. 8 ist eine schräge Draufsicht auf die Platte 63 die drehbar in der Kappe 37 gelagert ist zu sehen. Die Platte ist wie die beiden Pfeile andeuten in beide Drehrichtungen frei beweglich.

In der Fig. 9 ist eine Schrägaufsicht auf das Gehäuse 4 zu sehen. Man erkennt den Einlasskanal 7, den Auslasskanal 8 und die Leerlauföffnung 9.

In Fig. 9 ist eine Belüftungsöffnung mit 65 bezeichnet, durch die beim Abschrauben des Deckels 2 Luft von außen in den Aufnahmeraum 5 eintreten aber kein Öl austreten kann.

In der Fig. 10 ist das Gehäuse 4 mit Filtereinrichtung 1 während des Anschraubens geschnitten dargestellt. Die Platte 63 kann beim Anschrauben mitgedreht werden, da sie in der Kappe 37 drehbar gelagert ist. Die Platte 63 kann aber auch nur axial bewegt werden, während die Filtereinrichtung 1 angeschraubt wird. Wenn das Verschlusselement 12 auf der Öffnung des Leerlaufkanals 9 zu liegen kommt, dreht sich die Platte 63 nicht mehr weiter mit der Filtereinrichtung 1 mit. Die Filtereinrichtung 1 wird solange weiter festgeschraubt bis auch die Dichtung 50 zur Anlage am Gehäuse 4 kommt, währenddessen ruht die Platte 63. Auf diese Weise wird vermieden, dass die Dichtung 12 über die Öffnung des Leerlaufkanals 9 reibt. Die an die Dichtung 50 angeformte Lippe 43 liegt nun an der Innenwand der Aufnahme des Gehäuses 4 an und dichtet die Filtereinrichtung gegenüber der Umgebung ab.

Gemäß Fig. 10 kann die Dichtung 50 einen, insbesondere zylindrischen, Fortsatz 43 oder Abschnitt 43 aufweisen, der axial in einen Ringraum 64 hineinragt, der zwischen dem Zwischenstück 3 bzw. der Kappe 37 und dem Gehäuse 4 entsteht, wenn der Deckel 2 aufgeschraubt ist, wobei der Fortsatz 43 beim Abschrauben des Deckels 2 auch dann noch radial dichtet, wenn die axiale Dichtung des Dichtelements 50 durch Abheben vom Gehäuse 4 aufgehoben ist.

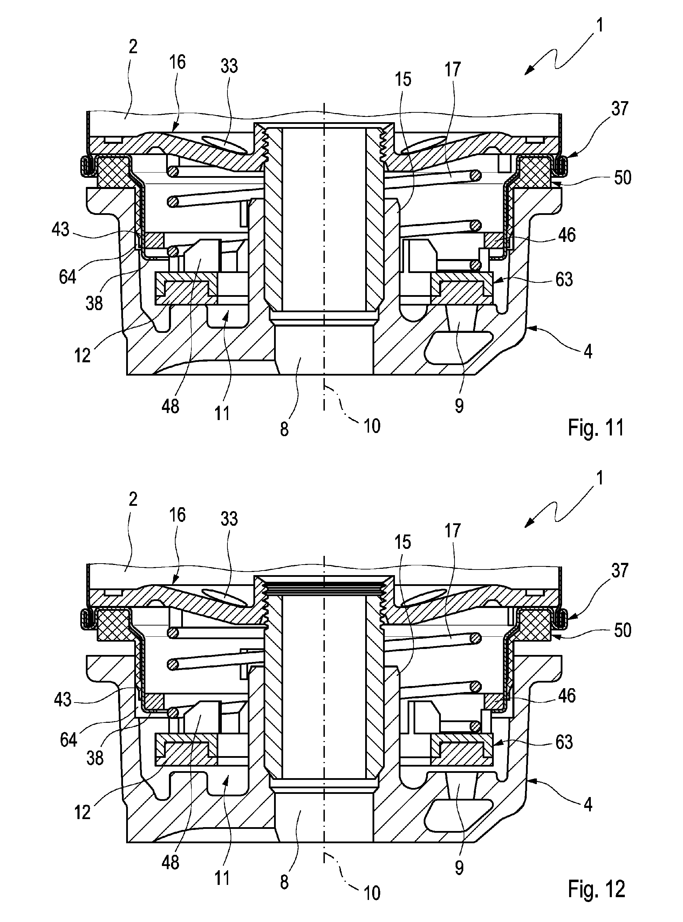

In der Fig. 11 ist die Filtereinrichtung im angeschraubten Zustand gezeigt. Durch das Festschrauben wird der Verbindungssteg 46 der Platte 63 von dem umgebogenen Rand 38 der Kappe 37 abgehoben. Das Federelement 17 drückt das Verschlusselement 12 auf die Öffnung des Leerlaufkanals 9.

Beim Abschrauben der Filtereinrichtung 1 vom Gehäuse 4 wird die Platte 63 nicht mit der Filtereinrichtung 1 mitbewegt, weil sie drehbar in der Kappe 37 gelagert ist. Nach ein bis zwei Drehungen der Filtereinrichtung nimmt der Rand 38 der Kappe 37 den Verbindungssteg 46 der Platte 63 wieder mit, sodass die Leerlauföffnung des Leerlaufkanals 9 wird freigegeben, und das Öl aus dem Aufnahmeraum 5 der Filtereinrichtung 1 über den Leerlaufkanal 9 abfließen kann bevor die Filtereinrichtung 1 vom Gehäuse losgeschraubt ist.

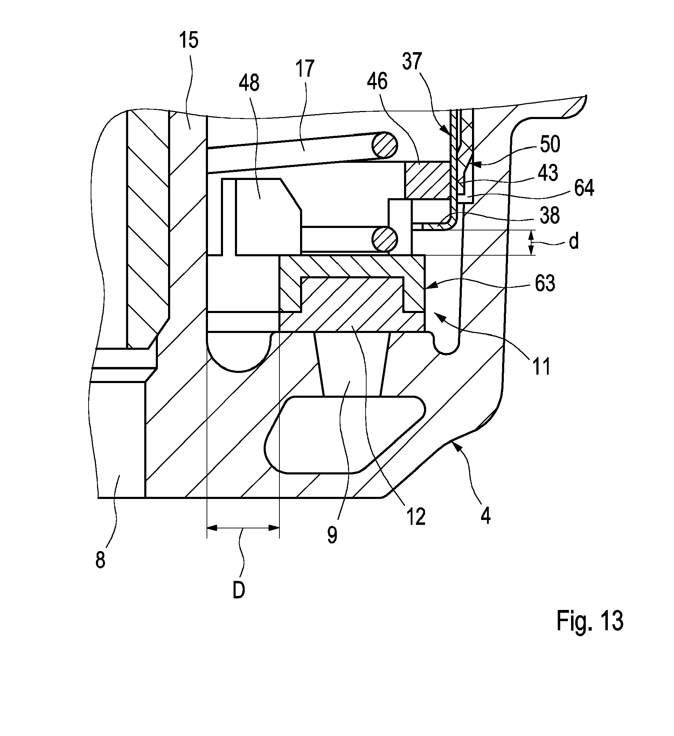

In der Fig. 13 ist ein Detail der Fig. 11 zu sehen, wo die Filtereinrichtung 1 fest an dem Gehäuse 4 angeschraubt ist. Die Abstände d und D bestimmen den Druckverlust des Öls beim Durchströmen der Filtereinrichtung 1 im Betrieb.

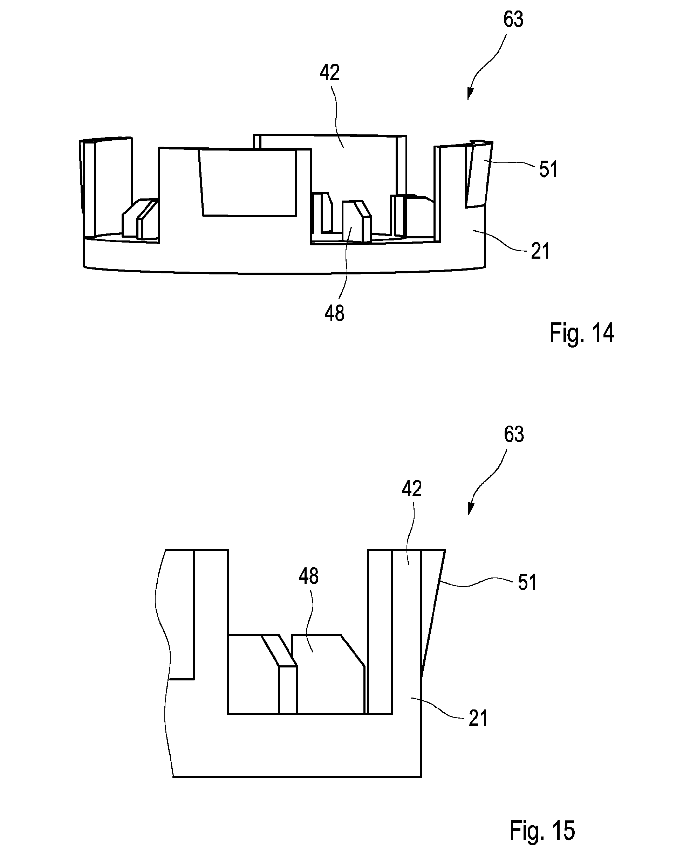

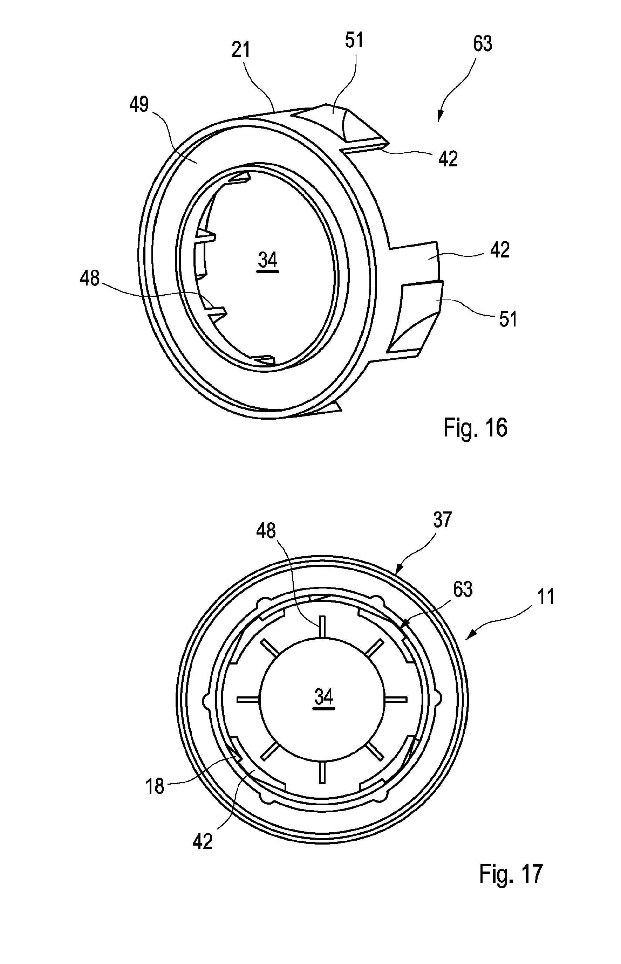

In den Fig. 14 bis 17 ist eine alternative Ausführungsform zu sehen. Hier ist ebenfalls die Seitenwand 21 der Platte 63 durchbrochen. Auf mindestens einem Teilstück 42 der Seitenwand 21 befindet sich eine Rampe 51. Auf der einen Seite weist die Rampe 51 eine stetig ansteigende Fläche auf, auf der anderen Seite eine gerade Kante, die auf dem Umfang der Seitenwand 21 senkrecht steht. Diese Rampen 51 wirken mit den Vorsprüngen 18 der Kappe 37 zusammen, in der Form, dass durch die Kante der Rampen 51 und dadurch die Mitnahme der Platte 63 beim Abschrauben der Filtereinrichtung 1 gewährleistet wird. Durch die Rampensteigung wird die Federkraft des Federelementes 17 überwunden. Dabei wird die Platte 63 axial unabhängig von der Gewindesteigung angehoben. Beim Abschrauben der Filtereinrichtung 1 wird die Leerlauföffnung des Leerlaufkanals 9 freigegeben, so dass das Öl aus dem Aufnahmeraum 5 abfließen kann, bevor die Dichtung 50 axial die Berührungsfläche des Gehäuses 4 verlassen hat, also deutlich bevor die Filtereinrichtung 1 vollständig vom Gehäuse 4 abgeschraubt ist.

Beim Anschrauben der Filtereinrichtung 1 ist die Platte 63 in der Kappe 37 bedingt drehbar gelagert. Wenn das Verschlusselement 12 auf der Leerlauföffnung des Leerlaufkanals 9 aufsetzt, bewegt sich die Platte 63 nicht mehr axial und sie rotiert auch nicht mehr mit der Filtereinrichtung 1 mit.

Die Filtereinrichtung 1 wird dann noch fest auf das Gehäuse aufgeschraubt. Dadurch gibt es keine Reibung des Verschlusselementes 12 an der Leerlauföffnung. Die Leerlauföffnung des Leerlaufkanals 9 wird durch die Federkraft des Federelementes 17, die das Verschlusselement 12 auf das Gehäuse 4 drückt, dicht verschlossen. Der Rand 38 der Kappe 37 liegt an geeigneter Stelle an dem Außenumfang der Platte 63 an, damit die Platte 63 nicht bei der Montage der Filtereinrichtung 1 aus der Kappe 37 herausfällt.

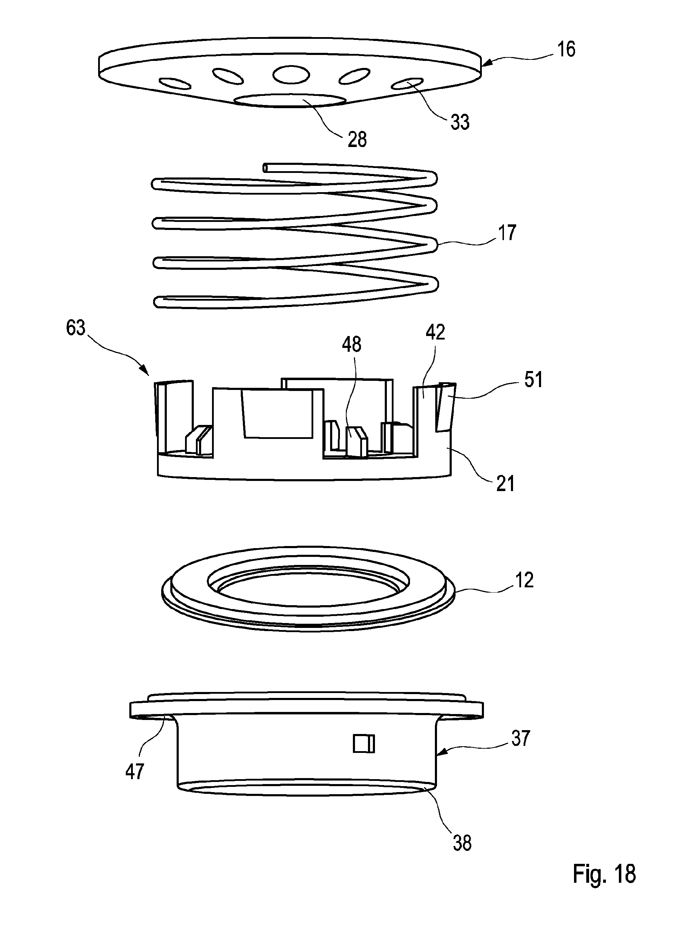

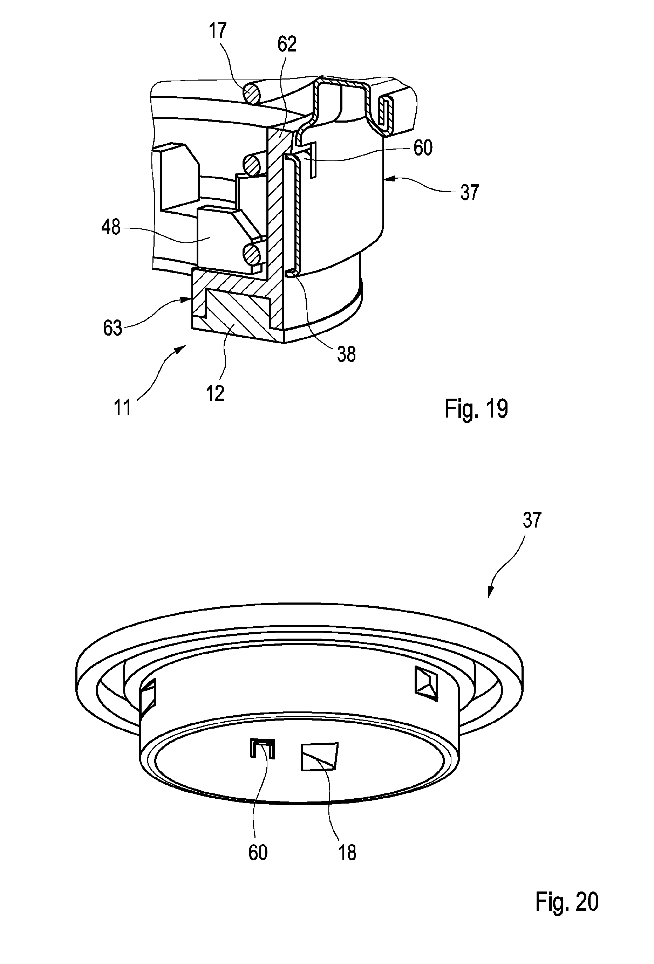

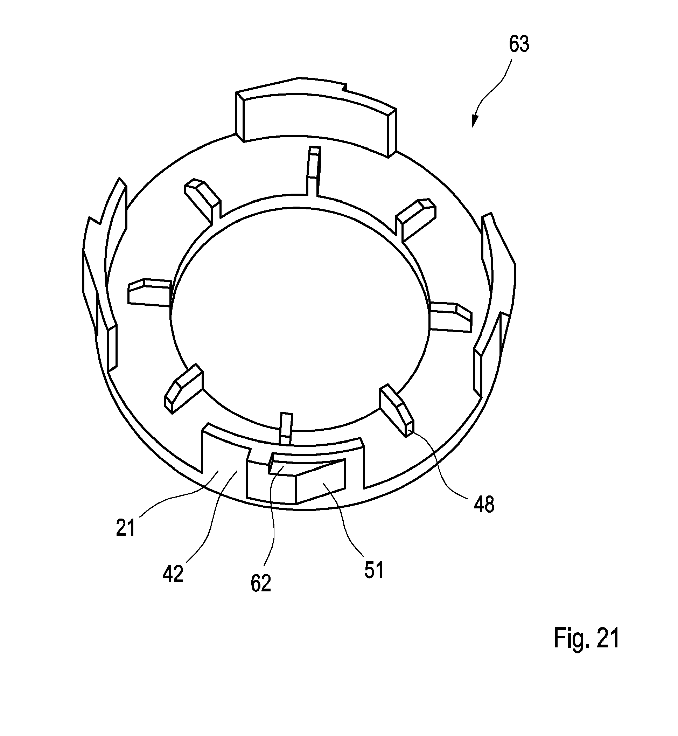

In den Fig. 18 bis 21 ist eine weitere Ausführungsform dargestellt. Hierbei weisen die Seitenteile 42 des durchbrochenen Seitenrandes 21 der Platte 63 einen Vorsprung 62 auf, an dem ein umgebogener Vorsprung 60 der Kappe 37 anliegt und zwar derart, dass die Platte 63 nicht wieder versehentlich auf die Öffnung des Leerlaufkanals gedrückt wird. Dieser umgebogene Vorsprung 60, 62 kommt auch zum Tragen, wenn die Platte 63 im Vergleich zur Kappe 37 gedreht wird, sich nicht mit der Filtereinrichtung mitbewegt, dann liegt der Vorsprung 61, 62 auf dem umgebogenen Rand 38 der Kappe 37 auf und verhindert an dieser Position das Absinken der Platte 63 auf den Leerlaufkanal. Beim Abschrauben des Filtergehäusedeckels 2 wirken wieder die Rampen 51 zusammen mit den Vorsprüngen 18 in der Kappe 37 und überwinden so die Federkraft des Federelementes 17 so dass die Leerlauföffnung des Leerlaufkanals 9 freigegeben wird, bevor die Dichtung 50 axial die Berührungsfläche des Gehäuses 4 verlassen hat und die Filtereinrichtung 1 komplett abgeschraubt ist. Die Anzahl der Vorsprünge 60, 61, 62 ist beliebig wählbar.

Beim Anschrauben des Filtergehäusedeckels 2 verhält sich diese Ausführungsform wie die beiden anderen Ausführungsformen.

## Patentansprüche

1. Filtereinrichtung (1), insbesondere ein Ölfilter zum Reinigen von Schmieröl für Verbrennungsmotoren von Kraftfahrzeugen,
- mit einem, einen Aufnahmeraum (5) begrenzenden Filtergehäusedeckel (2), in dem ein Ringfilterelement (6) angeordnet ist,
- mit einem Gehäuse (4), in welchem mittig ein Dom (15) angeordnet ist und auf welches der Filtergehäusedeckel (2) aufschraubbar ist,
- mit wenigstens einem Zwischenstück (3), welches bei am Gehäuse (4) angeschraubtem Filtergehäusedeckel (2) zwischen Filtergehäusedeckel (2) und Gehäuse (4) angeordnet ist,
- mit einem gehäuseseitigen Einlasskanal (7), der mit einer Rohseite des Ringfilterelementes (6) kommuniziert und einem gehäuseseitigen Auslasskanal (8), der mit einer Reinseite des Ringfilterelementes (6) kommuniziert,
- mit einem gehäuseseitigen Leerlaufkanal (9), durch den der Aufnahmeraum (5) beim Entfernen des Filtergehäusedeckels (2) entleerbar ist,
- mit einer an dem Zwischenstück (3) angeordneten Verschlusseinrichtung (11), die ein Verschlusselement (12) aufweist, mit welchem der Leerlaufkanal (9) verschließbar ist,
- wobei die Verschlusseinrichtung (11) so ausgebildet ist, dass sie beim Anschrauben des Filtergehäusedeckels (2) am Gehäuse (4) in einer genau definierten Lage fixiert ist, in welcher das Verschlusselement (12) fluchtend zum Leerlaufkanal (9) angeordnet und durch das Anschrauben des Filtergehäusedeckels (2) in eine den Leerlaufkanal (9) verschließende Stellung verstellbar ist, während die Verschlusseinrichtung (11) beim Abschrauben des Filtergehäusedeckels (2) verdreht und gleichzeitig axial von dem Gehäuse (4) wegbewegt wird, so dass das Verschlusselement (12) den Leerlaufkanal (9) freigibt,
- wobei die Verschlusseinrichtung (11) eine Platte (63) aufweist, die eine zentrale Öffnung (34) und einen seitlichen Rand aufweist,
**dadurch gekennzeichnet,**
- **dass** die Verschlusseinrichtung (11) im Zwischenstück (3) um die Filterachse (10) drehbar angeordnet ist,
- **dass** der seitliche Rand der Platte (63) mit Öffnungen (40) durchbrochen ist und eine durchbrochene Seitenwand (21) der Platte (63) bildet.

2. Filtereinrichtung nach Anspruch 1,
**dadurch gekennzeichnet,**
**dass** ein von der durchbrochenen Seitenwand (21) in Umfangsrichtung eingefasster Innenbereich und ein die durchbrochene Seitenwand (21) in Umfangsrichtung einfassender Außenbereich durch die Öffnungen (40) miteinander kommunizieren.

3. Filtereinrichtung nach Anspruch 1 oder 2,
**dadurch gekennzeichnet,**
**dass** das Zwischenstück (3) eine Kappe (37) bildet oder aufweist und dass die Platte (63) der Verschlusseinrichtung (11) in der Kappe (37) drehbar gelagert ist.

4. Filtereinrichtung nach einem der Ansprüche 1 bis 3,
**dadurch gekennzeichnet,**
**dass** die Platte (63) beim Anschrauben des Filtergehäusedeckels (2) mit mindestens einer Rippe (51), die an mindestens einem Seitenteil (42) der durchbrochenen Seitenwand (21) der Platte (63) angeordnet ist, an einer Rampe (18) angreift und durch ein weiteres Anschrauben des Filtergehäusedeckels (2) in ihre den Leerlaufkanal (9) verschließende Stellung verstellbar ist.

5. Filtereinrichtung nach einem der Ansprüche 1 bis 4,
**dadurch gekennzeichnet,**
**dass** zwischen dem Zwischenstück (3) und dem Ringfilterelement (6) ein scheibenartiger Boden (16) vorgesehen ist, welcher mehrere in Umfangsrichtung verteilte Durchgangsöffnungen (33) aufweist,

6. Filtereinrichtung nach Anspruch 5,
**dadurch gekennzeichnet,**
**dass** zwischen der Platte (63) der Verschlusseinrichtung (11) und dem scheibenartigen Boden (16) ein Federelement (17) angeordnet ist, das bewirkt, dass das Verschlusselement (12) auf die Leerlauföffnung (9) gedrückt wird.

7. Filtereinrichtung nach einem der Ansprüche 1 bis 6,
**dadurch gekennzeichnet,**
**dass** die Drehbewegung der Verschlusseinrichtung (11) eine Axialverstellung der Verschlusseinrichtung (11) und damit ein Öffnen des Leerlaufkanals (9) bewirkt.

8. Filtereinrichtung nach einem der Ansprüche 1 bis 7,
**dadurch gekennzeichnet,**
**dass** ein das Verschlusselement (12) aufweisender Körper, insbesondere die Platte (63), aus Kunststoff oder aus Metall, insbesondere aus Blech, ausgebildet ist.

9. Filtereinrichtung nach einem der Ansprüche 1 bis 8,
**dadurch gekennzeichnet,**
**dass** das Verschlusselement (12) aus schmierölbeständigem Kunststoff ausgebildet ist.

10. Filtereinrichtung nach einem der Ansprüche 1 bis 9,
**dadurch gekennzeichnet,**
**dass** die Verschlusseinrichtung (11), insbesondere an der Platte (63), eine in Axialrichtung offene Ringnut (49) aufweist, in welcher das Verschlusselement (12) angeordnet ist.

11. Filtereinrichtung nach einem der Ansprüche 1 bis 10,
**dadurch gekennzeichnet,**
**dass** das Zwischenstück (3), insbesondere an der Kappe (37), eine in Axialrichtung offene Ringnut (47) aufweist, in welcher ein Dichtelement (50) angeordnet ist, welches das Zwischenstück (3) im angeschraubten Zustand des Filtergehäusedeckels (2) gegenüber dem Gehäuse (4) abdichtet.

12. Filtereinrichtung nach Anspruch 11,
**dadurch gekennzeichnet,**
**dass** das Dichtelement (50) mit einem Abschnitt (43) axial in einen radialen Ringraum (64) zwischen Zwischenstück (3), insbesondere Kappe (37), und Gehäuse (4) hineinragt.

13. Filtereinrichtung nach einem der Ansprüche 1 bis 12,
**dadurch gekennzeichnet,**
**dass** das Verschlusselement (12) ringförmig ist.
